# EUROPEAN PATENT APPLICATION

(11) **EP 4 844 649 A1**
(43) Date of publication of application: **25.11.2026**
(21) Application number: 25177494.9
(22) Date of filing: 20.05.2025
(51) Int. Cl.: G06Q 10/0631, G06Q 10/20

(54) **METHOD OF SERVICING AN AIRCRAFT ENGINE**

(71) Applicant: MTU Aero Engines AG, 80995 München (DE)
(72) Inventor: Voit, Manuel, 80995 München (DE); Michna, Rafal Pawel, 80995 München (DE)

(57) **Abstract**

The present invention relates to a method of servicing an aircraft engine, wherein
- the aircraft engine comprises a plurality of components;
- each of the plurality of components is provided with a respective component marking; the method comprising the steps:
- obtaining a data set (NFT) stored in a decentralized network between distributed nodes, in which data set the component markings of the aircraft engine are compiled;
- replacing at least one component of the aircraft engine by a replacement component;
- storing the replacement of the at least one component as a transaction to the data set and providing this transaction to each of the distributed nodes.

## Description

### Technical field

The present invention relates to a method of servicing an aircraft engine.

### State of the art

Over its service life, an aircraft engine undergoes maintenance and repair several times, wherein worn components can be replaced. Due to cost pressure, there may be a risk that a worn component is replaced by a "fake component". In other words, there is a risk that a replacement component does not meet the quality criteria, which may negatively impact the technical functionality of the aircraft engine, e.g. reduce service life and fly security.

### Description of the invention

An object of the present invention is to provide advantageous methods, e.g. for servicing and marking an aircraft engine.

In an embodiment, the method relates to an aircraft engine which comprises a plurality of components, wherein each of the components is provided with a respective component marking. All component markings of the individual aircraft engine are compiled in a data set (e.g. NFT), which is stored in a decentralized network between distributed nodes. A respective distributed node may act as a validator in the network, i.e. confirm the initial data set. When, during servicing, a component of the aircraft engine is replaced by a replacement component, this replacement may be stored as a transaction to the data set.

The transaction is provided to and confirmed by each of the distributed nodes. The decentralized network can for instance be used for a cross-manufacturer system, in which the data set of the respective aircraft engine cannot be compromised by third parties. Each replacement is stored as a transaction, i.e. is validated and confirmed by all other participants (validated nodes). This decentralization and the fact that verified participants (manufacturers and the like, see in further detail below) respectively act as a validated node make it hard if not impossible for any non-verified participant to install counterfeit components in the aircraft engine. This can for instance allow for a higher protection of key components and increase fly security.

**In** an embodiment, a method of servicing an aircraft engine comprises the steps:
- obtaining a data set (NFT) stored in a decentralized network between distributed nodes, in which data set the component markings of the aircraft engine are compiled;
- replacing at least one component of the aircraft engine by a replacement component;
- storing the replacement of the at least one component as a transaction to the data set and providing this transaction to each of the distributed nodes.

**In** an embodiment, a method of marking and aircraft engine comprises the steps:
- providing each of the plurality of components with a respective component marking;
- compiling the component markings in a data set (NFT) and providing the data set to a decentralized network between distributed nodes.

In an embodiment, a method of analyzing a component of an aircraft engine comprises:
- obtaining a data set (NFT) stored in a decentralized network between distributed nodes, in which data set the component markings of the aircraft engine are compiled;
- examining at least one component of the aircraft engine in a physical inspection;
- relating an inspection result to flight data of the at least one component.

Since the component marking, together with the decentralized and validated storage of the markings of the individual aircraft engine, allows for an individualization of a respective component (e.g. via production date, see below), each component can be related to flight data. The flight data can for instance comprise flight hours of the aircraft engine and/or of the individual component. A correlation with any results obtained from physical inspection during maintenance and repair may allow for engine monitoring systems at part level and give a more detailed understanding of degradation or failure mechanisms.

Further embodiments and features are provided throughout this disclosure and in particular in the dependent claims. Thereby, the individual features shall be disclosed independently of a specific claim category.

In an embodiment, at least all components of the aircraft engine, which comprise a blade or a vane, are provided with a component marking. Additionally, all shrouds of the aircraft engine may be provided with a respective component marking. In other words, all components of the aircraft engine, which have a gas channel side, may be provided with a respective component marking. By way of example, more than 100 components, e.g. more than 150 components, of the aircraft engine may have a respective component marking.

Each component may have its own individual component marking which differs from the component markings of the other components in the aircraft engine. Furthermore, comparing one aircraft engine to another engine which is identical in construction, identical components may differ in their respective marking (e.g. via a production date, see below). In other words, a component of one aircraft engine is individualized via its component marking, which differs from the marking of the same component of any other aircraft engine. Further, this individualized component marking is reliably assigned to the data set of the respective aircraft engine in the distributed network.

In an embodiment, the data set of the aircraft engine is stored as a non-fungible token. Each component marking of the respective aircraft engine may be assigned as an attribute to the non-fungible token. This may be realized in Blockchain technology, wherein any transaction to the non-fungible token, i.e. replacement of a component, is confirmed and stored by all distributed nodes.

In an embodiment, a respective distributed node may be a manufacturer, e.g. component and/or engine manufacturer. Alternatively or in addition, a distributed node may be a maintenance/repair shop or an engine operator, e.g. an airline. By way of example, the decentralized network may comprise all the aforementioned participants as distributed nodes.

In an embodiment, a respective component marking is provided as a 2D matrix coded information, i.e. on at least some of the components. In other words, the component marking may be provided as a QR code, e.g. as an encrypted content (see below).

In an embodiment, the respective component marking is provided below a coating. This applies for at least one or some of the components of the aircraft engine, e.g. not necessarily for all its components. The marking may be applied during manufacturing of the respective component, e.g. after forming the component but prior to applying the coating. The coating may serve as a protection in use, e.g. serve as a heat and/or mechanical protection of the component. By providing the component marking below the coating, the marking is protected.

In an embodiment, the component marking is applied in coded form to at least some of the components. In other words, the component marking is encrypted, e.g. can only be read out or be decrypted with an appropriate key.

In an embodiment, the respective component marking is coded in the composition of a marking substance applied to at least some of the components. This may be an alternative or be combined with the component marking below the coating (some components being marked in this way and other components in that way). Apart from reducing a risk of an unauthorized readout, the coded substance can be provided on a comparably small space. Vice versa, this allows for providing the component marking on each component, e.g. also on components with limited space.

The substance can be applied to the component as a chemical or organic liquid, e.g. to a predefined area of the component. The substance can be chosen to be not destroyed when the engine is in operation, so that the marking can be read out during service. The component marking can be coded in the chemical composition of the substance, which may enable a coded and unique component assignment.

In an embodiment, the component marking comprises a serial number and/or a part number and/or a date. By providing all three of them, e.g. chain sequence serial number, part number, and date, an individualization of each component is possible. A respective component marking can for instance be coded in a substance and/or in a matrix code, see above. By way of example, the component marking may have the same structure for all components of the aircraft engine.

An embodiment relates to an aircraft engine with a plurality of components, wherein each of the components is provided with a respective component marking. Therein,
- the respective component marking may be provided as 2D matrix coded information on at least some of the components, and/or
- the respective component marking may be provided below a coating on at least some of the components, and/or
- the component marking may be applied in encrypted form on at least some of the components, and/or
- the respective component marking may be coded in a composition of a marking substance applied to at least some of the components.

As to further possible embodiments and details, reference is made to the description above.

### Brief description of the drawings

Below, the methods are explained in further detail by means of exemplary embodiments. Therein, the individual features can also be relevant in a different combination.
- Figure 1: shows a schematic cross-sectional view of am aircraft engine;
- Figure 2: shows a generation of a component marking and a respective data set;
- Figure 3: shows a storage of the data set in a decentralized network with distributed nodes;
- Figure 4: summarizes some manufacturing steps in a flow diagram.

### Exemplary embodiments

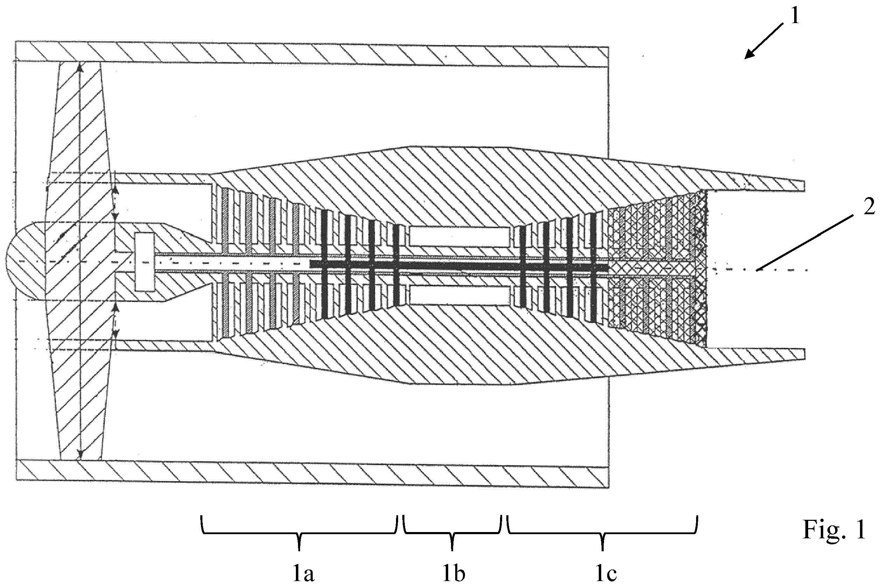

Fig. 1 shows an aircraft engine 1, specifically a turbofan engine, in an axial section. The aircraft engine 1 is functionally divided into a compressor 1a, a combustion chamber 1b and a turbine 1c. Both the compressor 1a and the turbine 1c are each made up of several stages, each stage comprising a stator vane ring and a rotor blade ring. During operation, the rotor blade rings rotate around the length axis 2 of the turbomachine 1, and air sucked in is compressed in the compressor 1a and then burned with fuel in the combustion chamber 1b. The resulting hot gas is expanded in the turbine 1c and drives the rotor blade rings.

The aforementioned elements, i.e. stator vane rings and rotor blade rings, with their respective vanes and blades, are components of the aircraft engine 1. During manufacturing, they are assembled in the aircraft engine 1, and during service life individual components can be replaced.

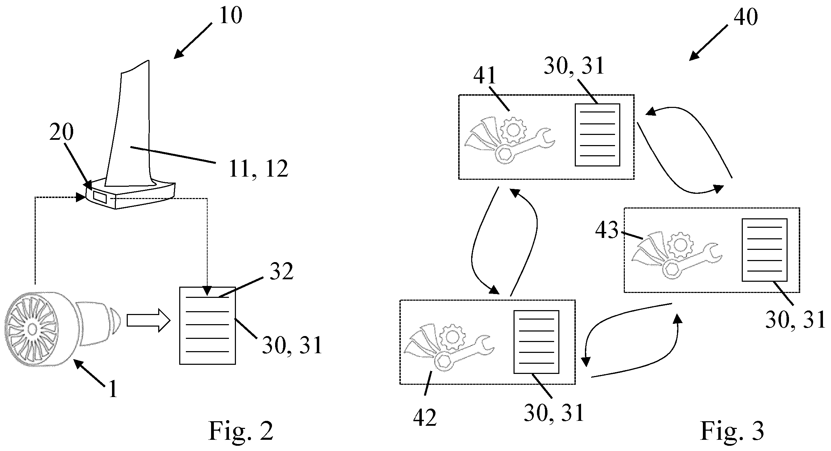

Fig. 2 illustrates a component 10 which may for instance be a blade 11 or a vane 12. The component 10 is provided with a component marking 20, which can comprise a serial number, part number and date (e.g. yymmdd). Though shown for only one component 10, a respective component marking 20 is provided on each component of the aircraft engine 1 (each gas side component). For the respective aircraft engine, all component markings 20 are stored in a data set 30 which may be a non-fungible token 31. Each component marking 20 is stored as an attribute 32 to the token 31. The resulting data set 30 contains the component markings 20 for all components 10 of the respective aircraft engine 1.

Fig. 3 shows a decentralized network 40, in which the data set 30 is distributed. The decentralized network 40 comprises a plurality of validated nodes 41-43, which may be manufacturers, maintenance/repair shops or engine operators. Each validated node 41-43 stores and confirms the data set 30. When a component of the aircraft engine is replaced by a replacement component, this is stored as a transaction to the data set 30, wherein this transaction is validated by each of the distributed notes 41-43. Each validated node 41-43 can confirm the replacement and, for instance, a component marking of the replacement component.

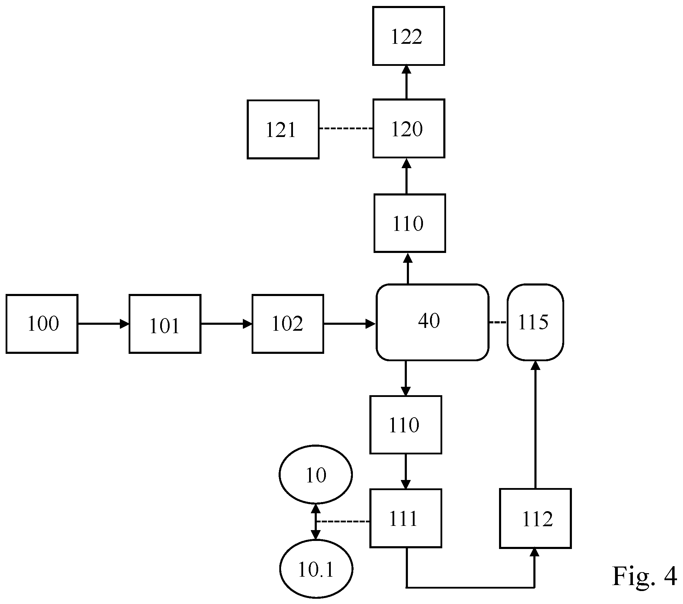

Fig. 4 summarizes some process steps in a flow diagram. A method of marking an aircraft engine may comprise providing 100 each component, i.e. each component having a gas channel side, with a component marking. The component markings may be compiled 101 in a data set, e.g. stored as attributes to a non-nonfungible token which represents the aircraft engine. The non-fungible token is provided 102 to the decentralized network 40, see also fig. 3.

In a method of servicing an aircraft engine, the data set is obtained 110 the from the decentralized network 40. When a component 10 of the aircraft engine is replaced by a replacement component 10.1, this is stored 112 as a transaction 115 to the data set.

A method of analyzing a component of an aircraft engine may comprise obtaining 110 the data set from the decentralized network 40. After examining 120 the component in a physical inspection 121, the inspection results may be related 122 to flight data to stored for the respective component.

### REFERENCE SIGNS

| | |
|---|---|
| Aircraft engine | 1 |
| Compressor | 1a |
| Chamber | 1b |
| Turbine | 1c |
| Length axis | 2 |
| Component | 10 |
| Component | 10.1 |
| Blade | 11 |
| Vane | 12 |
| Component marking | 20 |
| Data set | 30 |
| Token | 31 |
| Attribute | 32 |
| Network | 40 |
| Nodes | 40-43 |
| Providing | 100 |
| Compiling | 101 |
| Providing | 102 |
| Obtaining | 110 |
| Replacing | 111 |
| Storing | 112 |
| Transaction | 115 |
| Examining | 120 |
| Inspection | 121 |
| Relating | 122 |

## Claims

1. A method of servicing an aircraft engine (1), wherein
- the aircraft engine (1) comprises a plurality of components (10);
- each of the plurality of components (10) is provided with a respective component marking (20);
the method comprising the steps:
- obtaining (110) a data set (30) stored in a decentralized network (40) between distributed nodes (41-43), in which data set (30) the component markings (20) of the aircraft engine (1) are compiled (101);
- replacing (111) at least one component of the aircraft engine (1) by a replacement component (10.1);
- storing the replacement of the at least one component as a transaction (115) to the data set (30) and providing this transaction (115) to each of the distributed nodes (41-43).

2. A method of marking an aircraft engine (1), which comprises a plurality of components (10), the method comprising the steps:
- providing (100) each of the plurality of components (10) with a respective component marking (20);
- compiling (101) the component markings (20) in a data set (30) and providing (102) the data set (30) to a decentralized set (30) between distributed nodes (41-43).

3. A method of analyzing a component (10) of an aircraft engine (1), wherein
- the aircraft engine (1) comprises a plurality of components (10);
- each of the plurality of components (10) is provided with a respective component marking (20);
the method comprising the steps:
- obtaining (110) a data set (30) stored in a decentralized set (30) between distributed nodes (41-43), in which data set (30) the component markings (20) of the aircraft engine (1) are compiled (101);
- examining (120) at least one component (10) of the aircraft engine (1) in a physical inspection (121);
- relating (122) an inspection result to flight data of the at least one component (10).

4. The method of any one of the preceding claims, wherein at least all components (10) of the aircraft engine (1), which comprise a blade (11) or a vane (12), are provided with a component marking (20).

5. The method of any one of the preceding claims, the data set (30) of the aircraft engine (1) being stored as a non-fungible token (31), wherein each component marking (20) is assigned as an attribute (32) to the non-fungible token (31).

6. The method of any one of the preceding claims, wherein a respective distributed node (41-43) is a manufacturer, a maintenance/repair shop or an engine operator.

7. The method of any one of the preceding claims, wherein the respective component marking (20) is provided as 2D matrix coded information on at least some of the components (10).

8. The method of any one of the preceding claims, wherein the respective component marking (20) is provided below a coating on at least some of the components (10).

9. The method of any one of the preceding claims, wherein the component marking (20) is applied in encrypted form to at least some of the components (10).

10. The method of any one of the preceding claims, wherein the respective component marking (20) is coded in a composition of a marking substance applied to at least some of the components (10).

11. The method of any one of the preceding claims, wherein the component marking (20) comprises a serial number, a part number and/or a date.

12. An aircraft engine (1),
the aircraft engine (1) comprising a plurality of components (10);
each of the plurality of components (10) being provided with a respective component marking (20);
wherein the respective component marking (20) is provided as 2D matrix coded information on at least some of the components (10), and/or
wherein the respective component marking (20) is provided below a coating on at least some of the components (10), and/or
wherein the component marking (20) is applied in encrypted form on at least some of the components (10), and/or
wherein the respective component marking (20) is coded in a composition of a marking substance applied to at least some of the components (10).
